# EUROPEAN PATENT APPLICATION

(11) **EP 1 248 257 A2**
(43) Date of publication of application: **09.10.2002**
(21) Application number: 02251723.9
(22) Date of filing: 12.03.2002
(51) Int. Cl.: G11B 20/10, G11B 20/00, G11B 20/12, G11B 19/02, G11B 27/32, G11B 27/36, G11B 27/00

(54) **Apparatus and method for information record and playback, and program record medium recording information record and playback procedure program**

(30) Priority: 13.03.2001 JP 2001070905
(71) Applicant: Pioneer Corporation, Meguro-ku, Tokyo (JP)
(72) Inventor: Denda, Akihiro, C/o Pioneer Corporation, Oaza Yamada, Kawagoe-shi, Saitama (JP); Nonaka, Yoshiya, C/o Pioneer Corporation, Oaza Yamada, Kawagoe-shi, Saitama (JP)
(74) Representative: Haley, Stephen

(57) **Abstract**

When a library of content read from a playback section 2 of a CD, etc., is constructed in a record and playback section 3 comprising a large-capacity storage unit such as a hard disk, the content is read from the playback section 2 at speed n times that the normal speed and is recorded on the hard disk B at high speed and is played back at constant speed lower than the record speed. At the time, a system microcontroller 31 enables the user, etc., to operate a playback command button, etc., within the range of the program information pieces which have been recorded on the hard disk B, and controls a hard disk drive A so to perform operation responsive to the operation of the user, etc.

## Description

This invention relates to an information record and playback apparatus, an information record and playback method, and a program record medium recording an information record and playback procedure program for playing back program information recorded on a first record medium and recording the program information on a second record medium and playing back the program information recorded on the second record medium.

For example, an information record and playback apparatus for playing back program information recorded on a CD (compact disc), recording the program information on a hard disk, reading the recorded program information from the hard disk, and playing back the read program information is available as an information record and playback apparatus for playing back and recording program information.

The information record and playback apparatus installing a hard disk, for example, compresses program information recorded on a CD based on one of various formats and records the compressed program information on the hard disk and then plays back the program information recorded on the hard disk. The representative compression techniques at the present time include MP3 (MPEG: Moving Picture Experts Group; audio layer III) and A-TRAC3, an improvement of ATRAC (Adaptive Transform Acoustic Coding). For example, if music information played for one minute is compressed according to the representative compression method and recorded on a hard disk, the storage capacity of the music information on the hard disk corresponds to about 1M bytes. Therefore, assuming a hard disk having a storage capacity of about 10G bytes, it is made possible to record about 2000 pieces of music if the playing time of one piece of music is assumed to be five minutes.

Thus, the hard disk has a large capacity as compared with a CD and can store a large number of pieces of program information. The access time for playing back program information recorded on the hard disk is shorter than the access time for playing back program information recorded on a CD and further recovery from external vibration can be performed promptly and therefore the hard disk has a larger number of excellent advantages than a CD player for playing back program information recorded on a CD. Thus, the information record and playback apparatus each installing a hard disk tend to form a market centering around vehicle-installed information record and playback apparatus.

While the information record and playback apparatus installing a hard disk is playing back program information recorded on a record medium such as a CD, when it records the played-back program information on the hard disk for constructing a library, it is possible for the user, etc., to operate an operation button placed on an operation panel, etc. That is, the user, etc., generally does not consider the progress situation of constructing the library and therefore can operate an eject button to replace discs or a track specification button. Thus, while the library is being constructed, if the user, etc., operates an operation button, the operation is suppressed.

That is, for example, if the user, etc., wants to play back any desired program information while the library is being constructed, the user, etc., must wait until completion of constructing the library.

It is therefore an object of the invention to provide an information record and playback apparatus, an information record and playback method, and a program record medium recording an information record and playback procedure program for enabling the user, etc., to perform operation of track specification, etc., and being capable of performing the operation responsive to the operation of the user, etc., even while program information played back from a record medium such as a CD, a CD-ROM, or a DVD (Digital Versatile Disc) is being recorded on a record medium such as a hard disk.

To the end, according to the invention, there is provided an information record and playback apparatus for playing back program information recorded on a first record medium and recording the played-back program information on a second record medium, the information record and playback apparatus comprising first playback means for playing back the program information recorded on the first record medium, record means for recording the program information played back by the first playback means on the second record medium, second playback means for playing back the program information recorded on the second record medium, and control means for controlling so as to record the program information on the second record medium at higher speed than playback speed in playing back the program information from the first record medium and play back the program information recorded on the second record medium at the playback speed, characterized in that while the program information is being recorded at the record speed higher than the playback speed, the control means enables the user, etc., to operate operation means for the program information which has been recorded on the second record medium, and controls so as to perform operation responsive to the operation of the user, etc.

The control means records identification information to identify the program information recorded on the first record medium on the second record medium together with the program information and causes display means to display the identification information corresponding to the program information which has been recorded on the second recordmedium.

The described information record and playback apparatus of the invention accepts the operation of track specification, etc., by the user to play back the program information which has been recorded on the second record medium during the operation at higher record speed than the playback speed, and operates in response to the operation of the user, etc. The identification information to identify the program information is also recorded and the recorded identification information is displayed.

Accordingly, recording on the second record medium can be performed ahead of playing back program information and even during the playback and record operation, if recording on the second record medium is complete, the program information which has been recorded on the second record medium can be specified for playback without stopping the playback and record operation. Therefore, for example, even if the program information desired by the user, etc., is not yet played back, it is made possible for the user, etc., to enjoy playing back the program information if the program information has been recorded on the second record medium.

Further, the identification information to identify the program information which has been recorded on the second record medium is displayed, so that the user can visually check the program information which has been recorded, thereby checking the record progress, and the operation of track specification, etc., by the user can be helped. Therefore, the operability involved in the playback and record operation is enhanced.

To the end, according to the invention, there is provided an information record and playback method of playing back program information recorded on a first record medium and recording the played-back program information on a second record medium, the information record and playback method comprising a first step of recording the program information on the second record medium at higher speed than playback speed in playing back the program information from the first record medium, a second step of playing back the program information recorded on the second record medium in the first step at the playback speed, a third step of enabling the user, etc., to operate operation means for the program information which has been recorded on the second record medium while the program information is being recorded at higher record speed than the playback speed, and a fourth step of performing operation responsive to the operation of the user, etc.

According to the described information record and playback method, the operation of a playback command entry, track specification, etc., by the user to play back the program information which has been recorded on the second record medium is accepted during the operation at higher record speed than the playback speed, and operation responsive to the operation of the user, etc., is performed.

Accordingly, recording on the second record medium can be performed ahead of playing back program information and even during the playback and record operation, if recording on the second record medium is complete, the program information which has been recorded on the second record medium can be specified for playback without stopping the playback and record operation. Therefore, for example, even if the program information desired by the user, etc., is not yet played back, it is made possible for the user, etc., to enjoy playing back the program information if the program information has been recorded on the second record medium.

To the end, according to the invention, there is provided a program record medium recording an information record and playback procedure program for playing back program information recorded on a first record medium and recording the played-back program information on a second record medium, the information record and playback procedure program comprising a first step of recording the program information on the second record medium at higher speed than playback speed in playing back the program information from the first record medium, a second step of playing back the program information recorded on the second record medium in the first step at the playback speed, a third step of enabling the user, etc., to operate operation means for the program information which has been recorded on the second record medium while the program information is being recorded at higher record speed than the playback speed, and a fourth step of performing operation responsive to the operation of the user, etc.

The program record medium recording the program for causing a computer to execute the information record and play back procedure is placed in an electronic machine containing a microcomputer, such as a personal computer, and the program for causing a computer to execute the information record and playback procedure is installed and is executed by the microcomputer, whereby similar functions to those of a specialized information record and playback apparatus can be provided.

### In the Drawings:

FIG. 1 is a block diagram to show one embodiment of the invention.

FIG. 2 is a drawing cited to describe the operation of the embodiment of the invention and is a drawing to schematically show the correspondence between program information recorded on a hard disk B and program information played back from the hard disk B.

FIG. 3 is a flowchart cited to describe the operation of the embodiment of the invention.

The present invention will be described in detail with reference to the accompanying drawings.

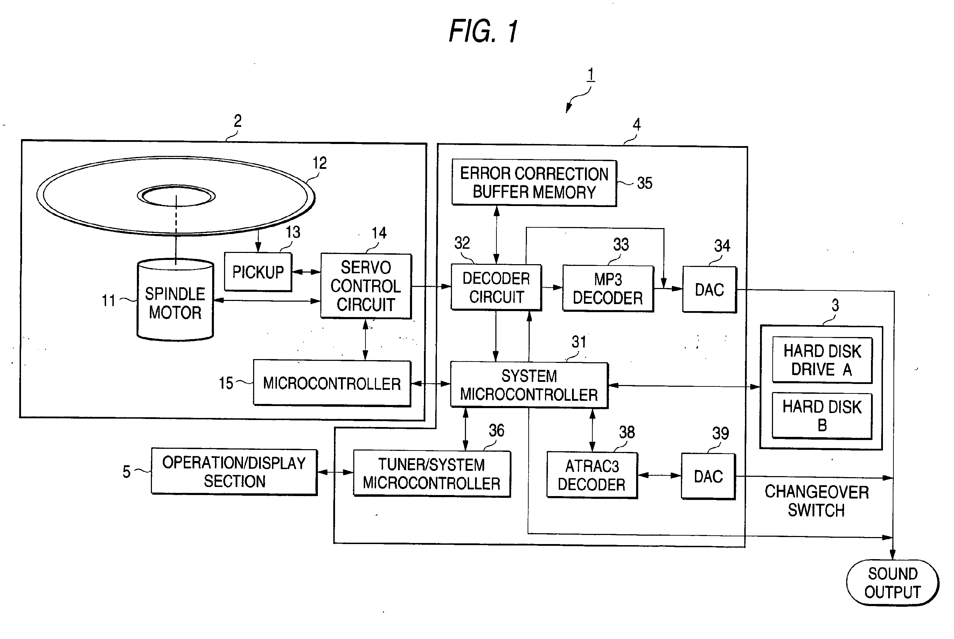

To begin with, the configuration of an information record and playback apparatus of the embodiment will be discussed with reference to a block diagram of FIG. 1.

In FIG. 1, an information record and playback apparatus 1 comprises a playback section 2 for playing back program information recorded on a record medium, such as a CD, a CD-ROM, or a DVD of a first record medium, which will be hereinafter referred to as optical disc, 12, a record and playback section 3 for recording program information on a record medium, such as a hard disk of a second record medium, which will be hereinafter referred to as hard disk, or playing back the recorded program information, a control section 4 for controlling the playback section 2 and the record and playback section 3 and performing processing of compressing and decompressing the program information played back by the playback section 2 and the record and playback section 3, and an operation/display section 5 having an operation section operated by the user, etc., and a display section implemented as a liquid crystal display, etc.

The playback section 2 comprises a spindle motor 11 for turning the mounted optical disc 12 at predetermined linear speed, a pickup 13 for optically reading information recorded on the optical disc 12, converting the information into an electric signal, and outputting the electric signal, a servo control circuit 14, and a microcontroller 15.

The servo control circuit 14 performs signal processing of the electric signal output from the pickup 13, thereby generating an error signal such as a tracking error signal or a focus error signal, and also generating an RF signal. It converts the generated RF signal into digital data and then performs demodulation and error correction conforming to the data format of the optical disc 12 and supplies the resultant data to a decoder circuit 32 placed in the control section 4.

The servo control circuit 14 performs processing of focus servo, tracking servo, and the like for the pickup 13 in accordance with an instruction from the microcontroller 15 based on the error signals such as the tracking error signal and the focus error signal and a synchronous error signal provided by processing of the demodulation and the error correction, and also performs servo control of the rotation speed of the spindle motor 11.

The servo control circuit 14 supplies the data subjected to the demodulation and the error correction to the decoder circuit 32 and also supplies identification information recorded on the optical disc 12 to the microcontroller 15 and a system microcontroller 31 placed in the control section 4.

If the optical disc 12 is a CD, the identification information is TOC information, etc., recorded in a read-in area of the CD. The TOC information, etc., comprises information of a program information playback condition, numbers assigned for identifying program information, which will be hereinafter referred to as track numbers, and the like. The servo control circuit 14 supplies the information to the microcontroller 15 and the system microcontroller 31.

The record and playback section 3 comprises a hard disk drive A and a hard disk B of a record area in which the program information played back by the playback section 2 is recorded by the hard disk drive A. The hard disk drive A performs processing of recoding program information on the hard disk B, playing back and erasing the recorded program information, and the like. A storage area of a file folder, etc., is formed on the hard disk B by the hard disk drive A. Program information is stored in the storage area.

The control section 4 comprises the above-mentioned decoder circuit 32 for decoding the data subjected to processing of demodulation and error correction, supplied from the servo control circuit 14 of the playback section 2, error correction buffer memory 35 wherein the data after being subjected to processing of demodulation and error correction by the servo control circuit 14 is temporarily stored and is sorted in a predetermined order, an MP3 decoder 33 for decompressing a playback signal subjected to predetermined compression processing (for example, data compressed in MP3), a DAC 34 for outputting the decoded or decompressed data as digital data or converting the decoded or decompressed data into analog data and outputting the analog data, the above-mentioned system microcontroller 31, an ATRAC3 decoder 38 for decompressing the data played back by the hard disk drive A, a DAC 39 for outputting the decompressed data as digital data or converting the decompressed data into analog data and outputting the analog data, a changeover switch Y, and a tuner/system microcontroller 36.

The system microcontroller 31 comprises a microprocessor (MPU) and executes a predetermined program, thereby controlling the whole operation of the information record and playback apparatus 1. When the decoded data is supplied from the decoder circuit 32, the system microcontroller 31 compresses the supplied data to data conforming to the standard of ATRAC3, etc. Then, it controls the hard disk drive A so as to record the compressed data on the hard disk B. At the time, it controls the hard disk drive A so as to record identification information to identify the program information on the hard disk B in relation to the program information.

The system microcontroller 31 comprises internal memory (not shown) and records the program information and the identification information supplied from the servo control circuit 14 in the internal memory. Then, it controls the hard disk drive A to record the program information recorded in the internal memory on the hard disk B. At the time, the track number of the program information which has been recorded on the hard disk B is recorded based on the identification information.

The changeover switchY is switched between the data output from the DAC 34 and the data output from the DAC 39 for supplying either data to an amplifier (not shown), etc. That is, to simply output the program information played back from the optical disc 12 without recording the program information on the hard disk, the changeover switch Y is switched so as to connect to a signal line of the DAC 34 to supply the data output from the DAC 34; to record the program information played back from the optical disc 12 on the hard disk, the changeover switch Y is switched so as to connect to a signal line of the DAC 39 to supply the data output from the DAC 39. The changeover switch Y is switched in accordance with an instruction from the system microcontroller 31.

The tuner/system microcontroller 36 serves as an interface with the operation/display section 5 connected thereto. That is, the tuner/systemmicrocontroller 36 supplies display data, etc., to the operation/display section 5 and supplies an operation signal, etc., from the operation section of the operation/display section 5 to the system micro controller 31 in accordance with instructions from the system microcontroller 31.

The operation/display section 5 is made up of components such as the above-mentioned display section (not shown) for displaying identification information of track numbers, etc., to identify program information based on display data supplied from the tuner/system microcontroller 36, and the above-mentioned operation section (not shown) provided with a playback command button operated for playing back program information recorded on the optical disc 12 or the hard disk, a record command button operated for recording the program information played back from the optical disc 12 on the hard disk B, a selection button for selecting a source from among the optical disc 12, the hard disk B, and the like, the above-mentioned track specification button operated for specifying the track number to identify program information recorded on the optical disc 12 or the hard disk B, buttons for fast-forwarding and reversing program information recorded on the optical disc 12 or the hard disk B, and the like.

With the described information record and playback apparatus 1 of the invention, when the user, etc., operates the playback command button of the operation section placed in the operation/display section 5, the operation/display section 5 sends the corresponding operation signal through the tuner/system microcontroller 36 to the system microcontroller 31.

At the time, whether the selected source is a source for playing back program information recorded on the optical disc 12 by the playback section 2 or a source for playing back program information recorded on the hard disk B by the record and playback section 3 is checked. If the source is determined to be that for playing back program information by the playback section 2, the changeover switch Y is controlled so as to connect to the signal line of the DAC 34 and a control signal is sent to the microcontroller 15 for giving a playback instruction.

The microcontroller 15 controls the servo control circuit 14 in accordance with the instruction from the system microcontroller 31. Following the instruction, the servo control circuit 14 drives the spindle motor 11, the pickup 13, etc., for playing back the program information recorded on the optical disc 12 and supplies the data subjected to processing of demodulation and error correction to the decoder circuit 32 of the control section 4.

At this time, the microcontroller 15 sets the rotation speed of the spindle motor 11 to one determined numeric value to turn the optical disc 12 at predetermined linear speed.

The decoder circuit 32 supplies the data supplied from the servo control circuit 14 to the error correction buffer memory 35 and decodes the data sorted in a predetermined order in the error correction buffer memory 35, and then supplies the resultant data to the MP3 decoder 33 or the DAC 34. The MP3 decoder 33 decompresses the compressed data and supplies the decompressed data to the DAC 34, which then outputs the supplied data as digital data or converts the supplied data into analog data and outputs the analog data to the amplifier (not shown), etc.

If the system microcontroller 31 determines that the source selected by the user, etc., is that for playing back program information by the record and playback section 3, the system microcontroller 31 controls the changeover switch Y so as to connect the changeover switch Y to the signal line of the DAC 39 and also controls the hard disk drive A to play back the program information recorded on the hard disk B. Then, it supplies the played-back program information (for example, compressed data conforming to the standard of ATRAC3, etc.,) to the ATRAC3 decoder 38. The ATRAC3 decoder 38 decompresses the supplied data and supplies the decompressed data to the DAC 39, which then outputs the supplied data as digital data or converts the supplied data into analog data and outputs the analog data to the amplifier (not shown), etc.

At this time, the system microcontroller 31 controls the hard disk drive A so as to play back the program information recorded on the hard disk B by the hard disk drive A at the same playback speed as that for playing back the program information recorded on the optical disc 12.

Next, when the user, etc., operates the record command button of the operation section placed in the operation/display section 5, the operation/display section 5 sends the corresponding operation signal through the tuner/system microcontroller 36 to the system microcontroller 31. The system microcontroller 31 controls the changeover switch Y so as to connect the changeover switch Y to the signal line of the DAC 39 and sends a control signal to the microcontroller 15 for instructing the microcontroller 15 to play back the program information recorded on the optical disc 12.

At this time, the system microcontroller 31 instructs the microcontroller 15 to play back the program information recorded on the optical disc 12 at higher speed than the playback speed applied for simply playing back the program information. Upon reception of the instruction, the microcontroller 15 controls the servo control circuit 14, for example, so as to set the rotation speed of the spindle motor 11 to a numeric value of n times the rotation speed applied for playing back at the normal playback speed (n is a natural number greater than 1) and read the program information recorded on the optical disc 12 turned at high speed accordingly by the pickup 13. At this time, a pickup drive mechanism, etc., (not shown) is controlled so that the pickup 13 can read the program information at high speed in response to the high-speed turning of the optical disc 12.

The program information read by the pickup 13 is converted into an electric signal and further the electric signal is processed by the servo control circuit 14 and is supplied to the decoder circuit 32. At this time, the servo control circuit 14 supplies identification information read by the pickup 13 to the system microcontroller 31.

The decoder circuit 32 decodes the data supplied from the servo control circuit 14 and supplies the data to the system microcontroller 31, which then compresses the data supplied from the decoder circuit 32 to data conforming to the standard of ATRAC3, etc., and controls the hard disk drive A so as to record the provided data on the hard disk B and also record the identification information previously supplied from the servo control circuit 14 on the hard disk B in relation to the data.

The track number of the program information which has been recorded on the hard disk B is stored in the internal memory based on the identification information. The hard disk drive A records the program information on the hard disk B and also reads the data recorded on the hard disk B at the same speed as the normal playback speed for playing back the program information. The ATRAC3 decoder 38 decompresses the supplied data and supplies the decompressed data to the DAC 39, which then outputs the supplied data as digital data or converts the supplied data into analog data and outputs the analog data.

Thus, if the user, etc., enters a record command, the optical disc 12 is turned at higher speed than the normal playback speed, whereby a large number of pieces of program information are read and recorded on the hard disk B in a short time and the program information recorded on the hard disk B is played back at the normal playback speed.

Therefore, the record speed can be increased for shortening the time required for recording and, for example, the user, etc., is also enabled to listen to a sound stream, etc., in the normal playback sound.

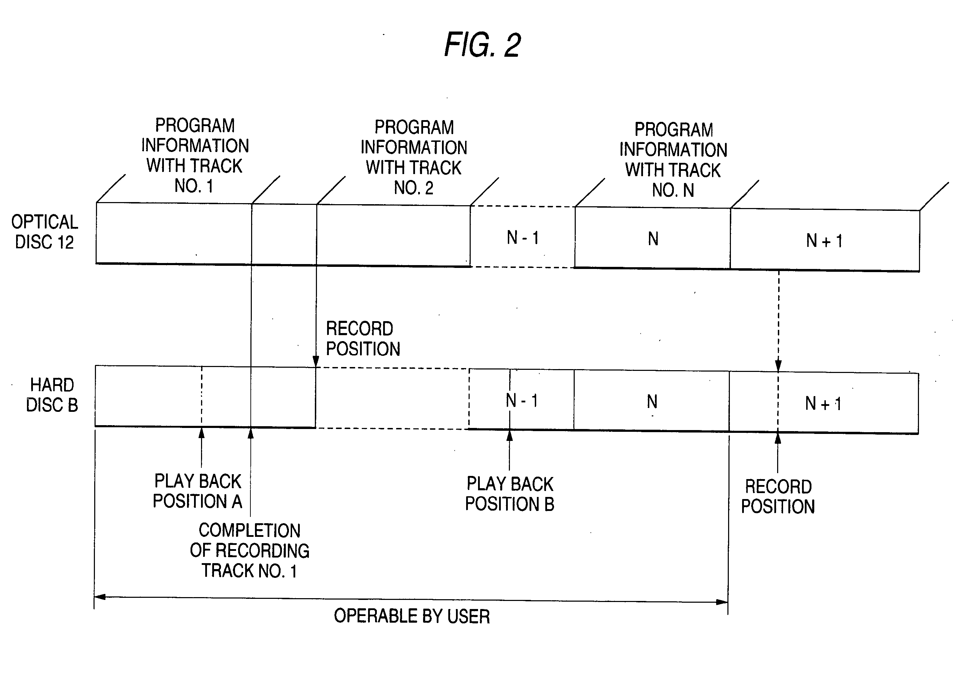

FIG. 2 schematically shows the correspondence between program information read from the optical disc 12 turned at high speed and recorded on the hard disk B and program information played back from the hard disk B.

As shown in FIG. 2, when the program information with track No. 1 recorded on the optical disc 12 is played back at high speed and is recorded on the hard disk B and the program information with track No. 1 recorded on the hard disk B is played back by the hard disk drive A, the hard disk drive A is still in a state in which it plays back the program information with track No. 1 (is playing back the portion indicated by PLAYBACK POSITION A of the hard disk B) upon completion of recording the program information with track No. 1 on the hard disk B (the position indicated by TRACK NO. 1 RECORD COMPLETION of the hard disk B). When the playback and record operation is continued and the program information with track No. "N+1" is recorded (the portion indicated by TRACK NO. "N+1" RECORD POSITION of the hard disk B), the hard disk drive A is, for example, in a state in which it plays back the program information with track No. "N+1" already recorded before the program information with track No. "N+1" (is playing back the portion indicated by PLAYBACK POSITION B of the hard disk B).

Thus, when the playback and record operation of playing back the program information recorded on the optical disc 12 at high speed and recording the program information on the hard disk B and playing back the program information recorded on the hard disk B at the normal playback speed is performed, a state in which the recorded program information does not always match the played-back program information occurs.

At this time, the system microcontroller 31 accepts an operation signal from the operation/display section 5 with respect to the program information which has been recorded on the hard disk B even during the playback and record operation. For example, when the program information with track No. "N+1" is recorded on the hard disk B, it is recognized that the program information pieces with track Nos. "1" to "N" have been recorded on the hard disk B, whereby it is made possible to accept user's operation of track number specification, fast forwarding and reversing, etc., for the program information pieces with track Nos. "1" to "N."

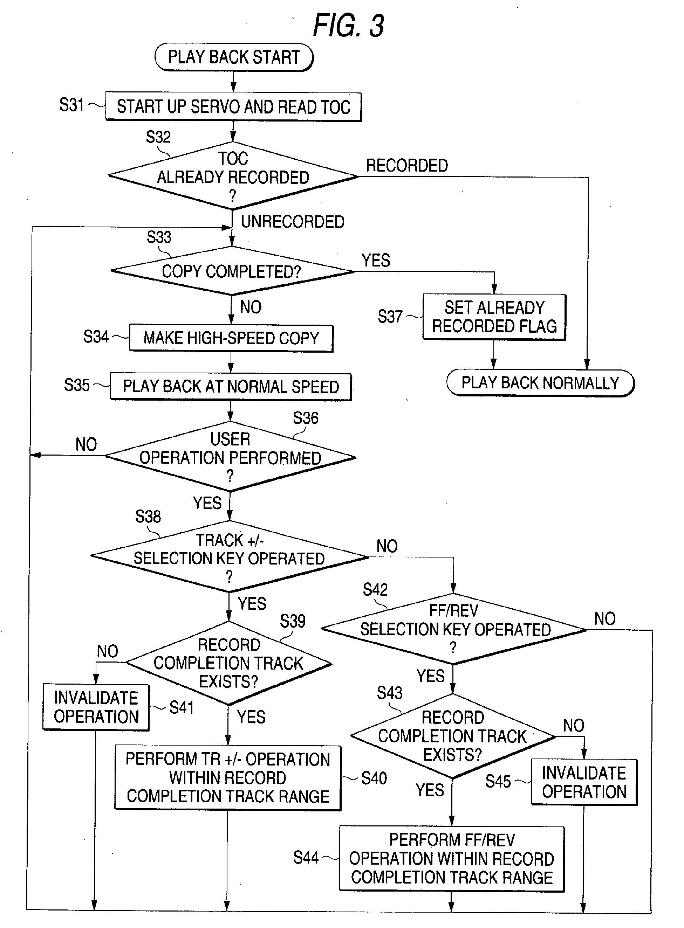

Next, processing of the system microcontroller 31 according to the invention will be discussed with reference to FIG. 3.

To begin with, the user, etc., is allowed to insert the optical disc 12 through an insertion slot (not shown) of the playback section 2 and the optical disc 12 is brought into a predetermined playback position and is mounted on a turntable (not shown).

When the user, etc., operates the record command button placed on the operation/display section 5, the system microcontroller 31 controls the microcontroller 15 to start up the servo of the spindle motor 11 to turn the optical disc 12 at high speed. If the optical disc 12 is a CD, the TOC information, etc., of the identification information recorded in the read-in area of the CD is read through the pickup 13 (step S31).

The system microcontroller 31 compares the TOC information, etc., read through the pickup 13 with the identification information recorded on the hard disk B and checks whether or not program information not recorded on the hard disk B exists (step S32).

If the system microcontroller 31 determines that program information not recorded on the hard disk B does not exist (already recorded), it causes the display section of the operation/display section 5 to display a message of ALREADY RECORDED without performing the record operation on the hard disk B, controls the microcontroller 15 to place the high-speed turning state of the optical disc 12 in the turning state at predetermined linear speed, connects the changeover switch Y to the signal line of the DAC 34, and causes the playback section 2 to perform the playback operation at the normal playback speed mentioned above.

If the system microcontroller 31 determines that program information not recorded on the hard disk B exists (unrecorded) , it allows the playback and record operation to be continued and checks whether recording of all program information pieces to be recorded on the hard disk B is complete (step S33).

If the system microcontroller 31 determines that high-speed recording of all program information pieces to be recorded is complete, it sets an already recorded flag indicating that recording of all program information pieces to be recorded is complete in a file folder, etc., (step S37).

The operation of playing back the program information recorded on the hard disk B by the high-speed recording of the program information at the normal playback speed is continued.

If it is determined that high-speed recording of all program information pieces to be recorded is incomplete, high-speed recording of the program information recorded on the optical disc 12 on the hard disk B as the program information is played back at high speed is continued (step S34) and the operation of playing back the program information recorded on the hard disk B by the high-speed recording at the normal playback speed is continued (step S35).

Next, the system microcontroller 31 determines whether or not the user, etc., operates an operation button of the operation section of the operation/display section 5, namely, whether or not an operation signal is supplied from the operation/display section 5 (step S36).

If it is determined that the user, etc., does not operate any operation button, step S33 and the later steps are repeated. If it is determined that the user, etc., operates an operation button, namely, if an operation signal from the operation/display section 5 is supplied through the tuner/systemmicrocontroller 36, for example, if the user, etc., operates the track specification button (step S38), the system microcontroller 31 checks the internal memory to see if the program information which has been recorded on the hard disk B exists (step S39).

If it is determined that the program information which has been recorded on the hard disk B does not exist, for example, if the user, etc., performs operation while the program information with track No. 1 is being recorded at high speed, the processing operation for the corresponding operation signal is not performed (step S41).

If it is determined that the program information which has been recorded on the hard disk B exists, the processing operation for the corresponding operation signal for the program information which has been recorded is performed. That is, the system microcontroller 31 controls the hard disk drive A to stop playing back the program information recorded on the hard disk B by the high-speed recording thereof at the normal playback speed while continuing the high-speed recording of the program information recorded on the optical disc 12 on the hard disk B. The operation responsive to the track specification button operation of the user, etc., is performed.

For example, when the program information with track No. 6 recorded on the optical disc 12 is recorded on the hard disk B at high speed and the program information with track No. 4 recorded on the hard disk B is played back, if the user, etc., specifies track No. 5 by operating the track specification button, the system microcontroller 31 checks that the program information with track No. 5 is recorded on the hard disk B, and controls the hard disk drive A to stop playing back the program information with track No. 4 and start to play back the program information with track No. 5 at the top position thereof while continuing to record the program information with track No. 6 at high speed (step S40).

If the user, etc., operates the track specification button to specify track No. 6 or greater, it is determined that the program information with the specified track No. is being recorded on the hard disk B at high speed or is not yet recorded, and the display section is caused to display a message such as RECORDING AT PRESENT or NOT YET RECORDED and the processing operation responsive to the operation of the user, etc., is not performed.

For example, if the user, etc., operates the fast-forwarding or reversing button (step S42), the system microcontroller 31 also checks the internal memory to see if the program information which has been recorded on the hard disk B exists (step S43).

If it is determined that the program information which has been recorded on the hard disk B does not exist, namely, if the user, etc., performs operation while the program information with track No. 1 is being recorded, the processing operation for the corresponding operation signal is not performed (step S45).

If it is determined that the program information which has been recorded on the hard disk B exists, the processing operation for the corresponding operation signal for the program information which has been recorded is performed. That is, the system microcontroller 31 controls the hard disk drive A to stop playing back the program information recorded on the hard disk B at the normal playback speed while continuing high-speed recording of the program information recorded on the optical disc 12 on the hard disk B.

The operation responsive to the fast-forwarding or reversing button operation of the user, etc., is performed. For example, when the program information with track No. 10 recorded on the optical disc 12 is recorded on the hard disk B at high speed and the program information with track No. 8 recorded on the hard disk B is played back, if the user, etc., operates the fast-forwarding or reversing button, track feed operation is performed in the range of track Nos. 1 to 9.

Finally, if the user, etc., specifies track No. 9, the system microcontroller 31 controls the hard disk drive A to stop playing back the program information with track No. 8 and start to play back the program information with track No. 9 at the top position thereof while continuing to record the program information with track No. 10 at high speed.

For example, as the user, etc., operates a check button, etc., of the operation section, the system microcontroller 31 causes the display section to display the track Nos. of the program information which has been recorded on the hard disk B.

That is, when the operation signal of the check button, etc., by the user, etc., is supplied through the tuner/system microcontroller 36, the system microcontroller 31 reads the track Nos. of the program information which has been recorded on the hard disk B and supplies the read track Nos. to the tuner/system microcontroller 36.

The tuner/system micro controller 36 converts the supplied track Nos. into display data and supplies the display data to the operation/display section 5 and the display section of the operation/display section 5 displays the display data.

For example, the display section displays the track Nos. of the program information which has been recorded, and blinks the track No. of the program information being recorded at present. The track No. of the program information being played back at present is given an arrow for display, causing the user to visually check the progress situation of the recording.

If the user puts a cursor on any desired one of the track Nos. displayed on the display section, whereby it is made possible to easily specify the track.

Thus, while program information is being recorded on the hard disk B at high speed, the operation of the user, etc., for the program information which has been recorded on the hard disk B is accepted, so that the user can enjoy playing back the program information recorded on the hard disk B without waiting for the high-speed record operation to complete.

The operation of the user, etc., is not limited to the operation of the track specification button or the fast-forwarding or reversing button mentioned above. For example, the operation of the user, etc., can also be applied to the operation of a scan button operated for playing back only the top portions of program information, a random button operated for playing back program information at random, and the like.

In the description of the embodiment of the invention, the second record medium is the hard disk, but the invention is not limited to it and if the record medium is replaced with a record medium to enable information to be recorded and played back, such as an MD, the invention can also be applied.

The information record and playback apparatus as so-called specialized machine for playing back and recording information has been described, but the invention is not limited to it. A computer program (information record and playback procedure program) which has the program information playback and record processing steps and the processing step of enabling the user, etc., to perform the operation described above and can be executed by a microprocessor, etc., may be recorded on a record medium such as a CD, a CD-ROM, or a DVD for distribution and the information record and playback procedure program may be installed in an electronic machine containing a microprocessor, etc., such as a personal computer, for execution.

If the information record and playback procedure program is thus distributed in the form of an information record medium, it is made possible to widely apply the invention to electronic machines comprising playback means and record means.

Distributing the information record and playback procedure program is not limited to that in the form of an information record medium. Using communication means such as the Internet, the information record and playback procedure program may be downloaded into an electronic machine such as a personal computer for execution.

As described above, according to the invention, the program information recorded on the optical disc 12 is played back at high speed and is recorded on the hard disk B and the user, etc., is enabled to operate the operation means for the program information which has been recorded on the hard disk B by the high-speed recording and operation responsive to the operation of the user, etc., is performed. Thus, the user, etc., can enjoy playing back any desired program information recorded on the hard disk B without waiting for the playback and record operation to complete. The user can check the progress situation of recording the program information on the hard disk B. Further, the track Nos. of the program information which has been recorded are displayed on the display section for the user to visually check, so that the convenience of the user, etc., is improved.

## Claims

1. An information record and playback apparatus for playing back program information recorded on a first record medium and recording the played-back program information on a second record medium, the information record and playback apparatus comprising:
first playback means for playing back the program information recorded on the first record medium;
record means for recording the program information played back by the first playback means on the second record medium;
second playback means for playing back the program information recorded on the second record medium; and
control means for controlling so as to record the program information on the second record medium at higher speed than playback speed in playing back the program information from the first record medium and play back the program information recorded on the second record medium at the playback speed, **characterized in that**
while the program information is being recorded at the record speed higher than the playback speed, the control means enables a user, etc., to operate operation means for the program information which has been recorded on the second record medium, and controls so as to perform operation responsive to the operation of the user, etc.

2. The information record and playback apparatus as claimed in claim 1, wherein the control means records identification information to identify the program information recorded on the first record medium on the second record medium together with the program information and causes display means to display the identification information corresponding to the program information which has been recorded on the second record medium.

3. An information record and playback method of playing back program information recorded on a first record medium and recording the played-back program information on a second record medium, the information record and playback method comprising:
recording the program information on the second record medium at higher speed than playback speed in playing back the program information from the first record medium;
playing back the program information recorded on the second record medium in the first step at the playback speed;
enabling a user to operate an operation unit for the program information which has been recorded on the second record medium while the program information is being recorded at higher record speed than the playback speed; and
performing operation responsive to the operation of the user.

4. A program record medium recording an information record and playback procedure program for playing back program information recorded on a first record medium and recording the played-back program information on a second record medium, the information record and playback procedure program comprising:
recording the program information on the second record medium at higher speed than playback speed in playing back the program information from the first record medium;
playing back the program information recorded on the second record medium in the first step at the playback speed;
enabling a user to operate an operation unit for the program information which has been recorded on the second record medium while the program information is being recorded at higher record speed than the playback speed; and
performing operation responsive to the operation of the user.

5. An information record and playback apparatus comprising:
a first playback unit for playing back program information recorded on a first recording medium;
a second playback unit for playing back program information recorded on a second recording medium; and
a controller for controlling the first playback unit and second play back unit to record the program information played back by the first playback unit on the second record medium,
wherein the program information is recorded on the second record medium at higher speed than playback speed in playing back the program information from the first record medium and play back the program information recorded on the second record medium at the playback speed;
while the program information is being recorded at the record speed higher than the playback speed, the controller enables a user to operate an operation unit for the program information which has been recorded on the second record medium, and the controller controls to perform operation responsive to the operation of the user.

6. The information record and playback apparatus as claimed in claim 5, wherein the controller records identification information to identify the program information recorded on the first record medium on the second record medium together with the program information and causes a display to display the identification information corresponding to the program information which has been recorded on the second record medium.
